# EUROPÄISCHE PATENTSCHRIFT

(11) **EP 0 551 160 B1**
(45) Veröffentlichungstag und Bekanntmachung des Hinweises auf die Patenterteilung: **14.08.1996**
(21) Anmeldenummer: 93200039.1
(22) Anmeldetag: 08.01.1993
(51) Int. Cl.: E02F 3/38, B60D 1/155, B62D 49/06, E01H 4/02

(54) **Geräteträger zum Anbau an selbstfahrende Fahrzeuge, insbesondere zum Präparieren von Skipisten**
Apparatus support for mounting on automotive vehicles, in particular for preparing ski slopes
Support d'appareil pour le montage sur véhicules automoteurs, en particulier pour la préparation des pistes de ski

(30) Priorität: 10.01.1992 IT BZ92001
(43) Veröffentlichungstag der Anmeldung: 14.07.1993
(73) Patentinhaber: LEITNER S.p.A., I-39049 Vipiteno (Bolzano) (IT)
(72) Erfinder: Webhofer, Artur, I-39043 Klausen (Bozen) (IT); Rainer, Hermann, I-39049 Sterzing (Bozen) (IT); Rainer, Josef, I-39040 Ratschings (Bozen) (IT); Casartelli, Richard, I-39040 Wiesen/Pfitsch (Bozen) (IT)
(74) Vertreter: Faraggiana, Vittorio, Dr. Ing.

(56) Entgegenhaltungen:
- AT-A- 379 756
- AU-B- 5 127 379
- DE-U- 8 632 321
- FR-A- 2 538 259
- US-A- 5 142 800

## Beschreibung

Die vorliegende Erfindung bezieht sich auf einen Geräteträger zum Anbau an selbstfahrende Fahzeuge, insbesondere zum Präparieren von Skipisten, gemäß dem Oberbegriff des Anspruchs 1.

Derartige Geräteträger dienen vor allem zum Schleppen von Geräten, wie z.B. von Fräsen zur Behandlung von Gelände, insbesondere von verschneitem Gelände.

Durch die verschwenkbare Ausbildung des Geräteträgers um eine vertikale Achse wird die Fahrt solcher selbstfahrender Fahrzeuge in Kurven ermöglicht. Die horizontale Verschwenkachse dieser Geräteträger dient zur Anhebung der Geräte und für den Transport derselben in einer Stellung, in der die Geräte mit dem Gelände nicht in Berührung stehen.

In einem durch das Patent US 4,572,315 geoffenbarten Fahrzeug zur Behandlung von Skipisten, ist der Geräteträger um eine horizontale Achse verschwenkbar mit dem Rahmen des Fahrzeuges verbunden. Die vertikale Verschwenkachse ist, gesehen in Längsrichtung, im wesentlichen in der Mitte des Geräteträgers angeordnet. Wenn auch dieses Fahrzeug zum Präparieren von Skipisten es erlaubt, eine Kurve auszufahren, ohne das Gerät vom Gelände abzuheben müssen, ist der Geräteträger in Kurven verhältnismäßig derart stark belastet, daß der Geräteträger entsprechend aufwendig und schwerbauend ausgebildet sein muß. Auch die in den Verschwenkachsen vorgesehenen Gelenke sind hohen Belastungen unterworfen, die verhältnismäßig häufige Wartungsarbeiten erfordern.

Durch das Gebrauchsmuster DE-G 86 32 321.0 wird dieses Problem teilweise dadurch gelöst, indem die horizontale Verschwenkachse zwischen der vertikalen Verschwenkachse und dem Verbindungsrahmen angeordnet wird und die vertikale Verschwenkachse des Geräteträgers in unmittelbarer Nähe des Fahrzeugrahmens angeordnet wird. So ist die vertikale Verschwenkachse in der Nähe der Hochachse des Fahrzeuges zum Präparieren von Skipisten d.h. um die vertikale Achse angeordnet, um die das Fahrzeug seine Lenkbewegungen ausführt. So sind die auf dem Geräteträger ausgeübten Kräfte im wesentlichen kleiner, wodurch der Geräteträger selbst im wesentlichen auch leichtbauender ausgeführt werden kann. Da die horizontale Verschwenkachse zwischen der vertikalen Verschwenkachse und dem Verbindungsrahmen angeordnet ist, wird die Beanspruchung der Drehgelenke in der horizontalen Drehachse bei Kurvenfahrten des selbstfahrenden Fahrzeuges beträchtlich herabgesetzt. Beide Verschwenkachsen befinden sich verhältnismäßig in der Nähe des Fahrzeugrahmen, wodurch der Geräteträger ohne bauliche Vorkehrungen eine erhöhte für die Fahrtsicherheit günstige Steifigkeit aufweist.

In der Veröffentlichung DE 33 01460 wird eine Vorrichtung zum Befestigen eines Arbeitsgerätes an einem Fahrzeug mit einem demselben zugeordneten ersten Rahmenteil, an dem über eine im wesentlichen vertikale Schwenkachse ein mit dem Arbeitsgerät verbundener zweiter Rahmenteil verschwenkbar gelagert ist, sowie mit wenigstens einer Stelleinrichtung zum Stabilisieren und Ausrichten des Arbeitsgerätes gegenüber dem Fahrzeug beschrieben. Der erste oder der zweite Rahmenteil weist wenigstens eine den Schwenkbereich begrenzende Stützfläche auf, der am jeweils anderen Rahmenteil zum Ausrichten des Arbeitsgerätes zu beiden Seiten der Längsmittenachse des Fahrzeuges bzw. des Arbeitsgerätes seitlich durch die Stelleinrichtungen schwenkbare Schwenkhebel zugeordnet sind, die in Bereitschaftsstellung eingeschwenkt und in Stabilisierungs- und Ausrichtungsstellung ausgeschwenkt sind und sich in Anlage an der Stützfläche befinden.

Im Dokument AT-PS 379 756 wird ein nachziehbares Pisten- bzw. Loipenpflegegerät beschrieben, in dem ein dem Aufbau der Anmeldung entsprechender Träger an seinem einen Ende mit dem Fahrzeug und mit seinem anderen Ende mit einem Balken die ein Kugel- oder Kreuzgelenk verbunden ist. Für die Hebebewegungen ist ein hydraulischer Arbeitszylinder vorgesehen, der zwischen dem Fahrzeug und dem Träger wirkt. Zwischen einem Balken und dem Fahrzeug ist ein Führungslenker derart an diese letzteren angelenkt, daß die Anlenkstellen des Führungslenkers und des Trägers ein Gelenkviereck bilden. Im Anspruch 2 kann eine der Seiten, im vorliegenden Fall der Träger, durch zwei Teleskoplenker verschwenkt werden. Die beschriebene Anordnung besitzt eine beschränkte Manovrierfähigkeit des selbstfahrenden Fahrzeuges, zumal der Abstand zwischen Anbaugerät und dem selbstfahrenden Fahrzeug bei Kurvenfahrten im wesentlichen gleich bleibt.

Den beschriebenen Vorveröffentlichungen ist gemeinsam, daß es nicht möglich ist, eine Einstellung des zwischen dem angebauten Gerät und dem selbstfahrenden Fahrzeug bestehenden Längsabstandes vorzusehen. So ermöglichen die bekannten Geräteträger nicht die Anpassung der von ihnen getragenen Geräte an die jeweils bestehenden Bedingungen zum Präparieren des insbesondere beschneiten Geländes. So ist z.B. auch eine eventuelle Tiefeneinstellung des Gerätes nur möglich, indem ein auch fUr die Anhebung des Geräteträgers selbst in eine unwirksame Stellung vorgesehener Arbeitszylinder beaufschlagt wird. Um überdies den Geräteträger in angehobener Stellung zu halten, sind entweder besondere Befestigungsmittel erforderlich, um den Geräteträger in einer während des Transportes festliegenden Stellung zu halten oder es sind aufwendige Auflageflächen notwendig, um das Gerät in der angehobenen Stellung zu halten.

Die Aufgabe der vorliegenden Erfindung besteht darin, die beschriebenen Mängel zu beseitigen und einen Geräteträger vorzuschlagen, der den gegebenen Bedingungen des Geländes besser anpassbar ist, der derart aufgebaut ist, daß die Manövrierfähigkeit des selbstfahrenden Fahrzeuges erhöht wird, der einen solchen Aufbau aufweist, daß die Stellmittel, z.B. hydraulische Zylinder, minimal beansprucht werden, der eine Behandlung des Geländes auch bei Anwesenheit von seitlichen Hindernissen, wie beispielsweise eines abschüssigen Geländes erlaubt und auch eine bessere Verteilung des Materials, z.B. Schnee, auf dem Gelände selbst ermöglicht.

Diese und weitere Aufgaben der vorliegenden Erfindung werden durch die kennzeichnende Merkmale des Anspruchs 1 gelöst.

Durch den teleskopierbaren Arm ist es erfindungsgemäß möglich eine schleppende Schwlmmstellung zu erhalten, wobei eine Art Deichselfunktion erreicht wird, ohne daß die seitlichen hydraulischen Stellzylinder beansprucht werden. Sind die beiden seitlichen Stellzylinder vollständig eingezogen oder befinden sich zueinanander symmetrisch in einer Zwischenstellung, so erhält man eine mittige Position des Gerätes, während in Schrägstellung, außer daß Böschungen oder seitliche Hindernisse vermieden werden, auch eine Förderwirkung beispielsweise des Schnees in Richtung der Mitte der Piste erzielt wird.

In Förderstellung wird der feste Teil des teleskopierbaren Armes von einem der beiden seitlichen. Stellzylinder auf eine festliegende Fläche des Fahrzeugrahmens gedrückt.

Nochmals zusammenfassend können folgende Betriebsarten erfolgen:
- Links- bzw. Rechtsschwenken des Arms und Arretierung in jedem beliebigen Schwenkwinkel.
- Den Arm in einer mittigen Position blockieren, d.h. automatische Arretierung genau in Längssachse des Fahrzeuges.
- Schwimmstellung, d.h. freies Nachlaufen des Geräteträgers in Kurven.
- Heben und Senken.

Die vier verschiedenen Betriebsarten können ohne aufwendige elektronische Positionierung des Geräteträgers erfüllt werden. Sie ergeben sich aus der Konstruktion selbst und werden funktionell wie folgt erzielt:
- Links- bzw. Rechtsschwenken: Einer der Arbeitszylinder (19 bzw. 22) wird eingefahren, während der andere Arbeitszylinder (22 bzw. 29) ausgefahren wird; der Längenausgleich erfolgt über den teleskopierbaren Arm bzw. Ausleger.
- In der Mitte blockieren: Beide Arbeitszylinder (19, 22) werden ganz eingefahren.
- Schwimmstellung: Der teleskopierbare Arm bzw. Ausleger wird vollständig ausgefahren, beide Arbeitszylinder (19, 22) haben ihre Kolbenstange auf die Hälfte der Hublänge ausgezogen, beide Arbeitszylinder (19, 22) werden drucklos geschaltet. Der teleskopierbare Arm wird durch Reibungswiderstand des Nachlaufgerätes bis auf den internen Anschlag herausgezogen. Die Längen sind so abgestimmt, daß bei maximaler Teleskopierlänge die Arbeitszylinder (19, 22) genau den halben Hub ausführen. Dadurch wird ein freies Nachlaufen des Nachlaufgerätes in Kurven gewährleistet.

Weitere Varianten und Ausbildungen des erfindungsgemäßen Geräteträgers gehen aus den Unteransprüchen hervor.

Einzelheiten und bauliche Merkmale des erfindungsgemäßen

Geräteträgers werden nachfolgend aufgrund eines in den Figuren der beigelegten Zeichnung dargestellten Ausführungsbeispiels beschrieben. Es zeigen,

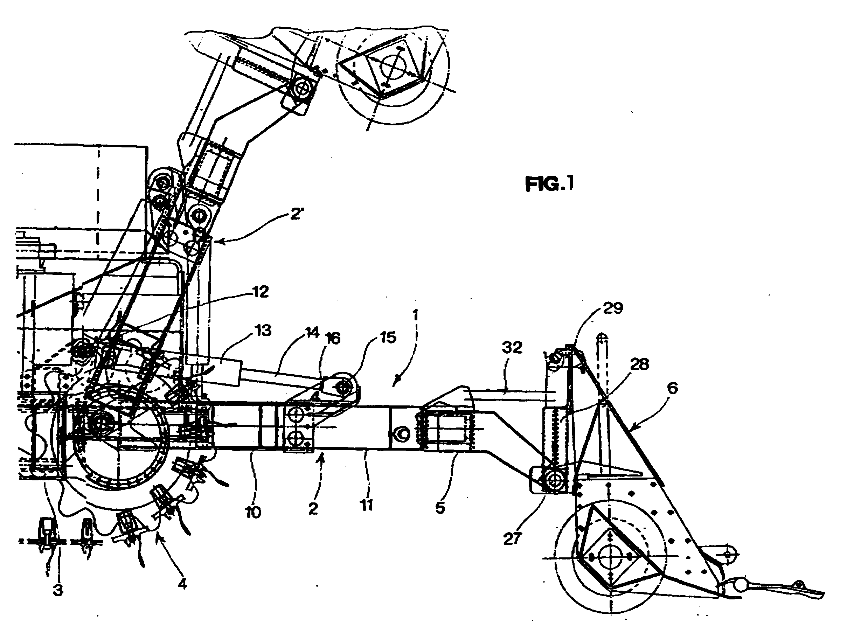

- Figur 1: einen erfindungsgemäßen Geräteträger in Seitenansicht,
- Figur 2: den erfindungsgemäßen Geräteträger in Draufsicht, und

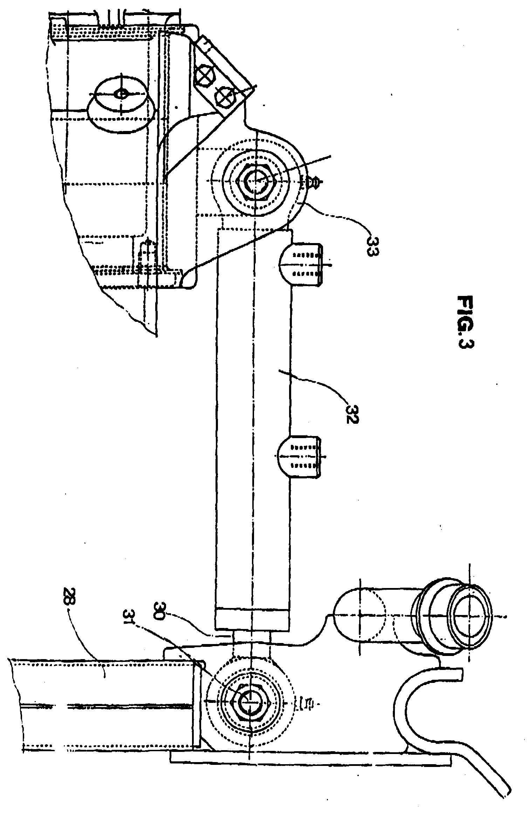

- Figur 3: eine Einzelheit der vorstehenden Figuren.

Wie in den Figuren dargestellt, umfaßt ein im allgemeinen mit 1 angegebener Geräteträger einen Arm 2, der an einem seiner Enden an einem Rahmen 3 eines selbstfahrenden Fahrzeuges angelenkt ist; im vorliegenden Fall eines Raupenfahrzeuges 4 bekannter Art und daher nicht näher dargestellt. Am anderen Ende trägt der Arm 2 einen gabelartigen Halter 5, der dazu bestimmt ist, an seinen freien Enden ein Gerät ZU lagern, im vorliegenden Fall eine Scnneefräse 6 zum Präparieren von Skipisten. Die Anlenkung des Arms 2 am Fahrzeugrahmen 3 wird durch eine Doppelgelenkkupplung 7 hergestellt, von der eines der Gelenke durch einen Bolzen 8 gebildet wird, der zur mittleren Längsachse des Fahrzeuges 4 senkrecht angeordnet ist und deren anderes Gelenk durch einen horizontalen Bolzen 9 hergestellt ist, der vom Bolzen 8 beabstandet ist. Im vorliegenden Fall befindet sich der Bolzen 9 in der Nähe des Bolzens 8 zwischen demselben und dem den Halter 5 tragenden Ende des Arms 2.

Erfindungsgemäß wird der Arm 2 durch eine Hohlprofil 10 gebildet, das am Bolzen 9 angelenkt ist und in welchem formschlüssig ein Profil 11 gleitbar aufgenommen ist, das an seinem äußeren Ende den Halter 5 trägt. Mit senkrechtem Abstand von der Achse 9 und oberhalb desselben ist am Rahmen 3 in 12 ein hydraulischer Zylinder 13 angelenkt, dessen Kolbenstange 14 an seinem Ende in 15 an einem Flansch 16 angelenkt ist, der am dem Bolzen 8 abgewandten Ende des festliegenden Profils 10 befestigt ist. In einer durch den Bolzen 9 gehende, horizontale Ebene und symmetrisch zur Achse 35 sind von der Längsachse 35 beabstandete Gelenke 17 und 18 vorgesehen. Am Gelenk 17 ist ein Zylinder 19 angelenkt, dessen Kolbenstange in 21 am äußeren Ende des gleitbaren Profils 11 angelenkt ist. Am Gelenk 18 ist hingegen ein Zylinder 22 angelenkt, dessen Kolbenstange in 24 am Ende des Profils 11 derart angelenkt ist, daß die Anlenkungen 21 und 22 sich zur durch die Längsachse des Arms 2 gehende vertikalen Ebene spiegelbildlich befinden.

Die beiden Arme 25 und 26 des Halters 5 erstrecken sich zueinander symmetrisch nach unten und tragen an ihrem Ende in 27 verschwenkbar einen Rahmen 28, dessen oberer Träger 29 wiegeartig ausgebildet ist, an dem die Fräse 6 fest einhängbar ist. Am Rahmen 28 ist in 31 die Kolbenstange 30 eines hydraulischen Zylinder 32 angelenkt, der seinerseits am an der Basis 34 des Halters 5 festliegenden Flansch 33 angelenkt ist.

Die Zylinder 19 und 22 sind zweckmäßigerweise mit einer nicht gezeigten hydraulischen Anlage des selbstfahrenden Fahrzeuges derart verbunden, daß einer der beiden Zylinder mit Druckmittel beaufschlagt wird, während der andere Zylinder unbelastet bleibt, wenn man den Arm 2 um die vertikale Achse 8 oder umgekehrt verschwenken möchte. So sind auch die Zylinder 13 und 32 hydraulisch mit der hydraulischen Anlage derart verbunden, daß der Geräteträger von der Bedienungsperson des selbstfahrenden Fahrzeuges bequem steuerbar ist.

Die Wirkungsweise des erfindungsgemäßen Geräteträgers kann kurz wie folgt beschrieben worden:

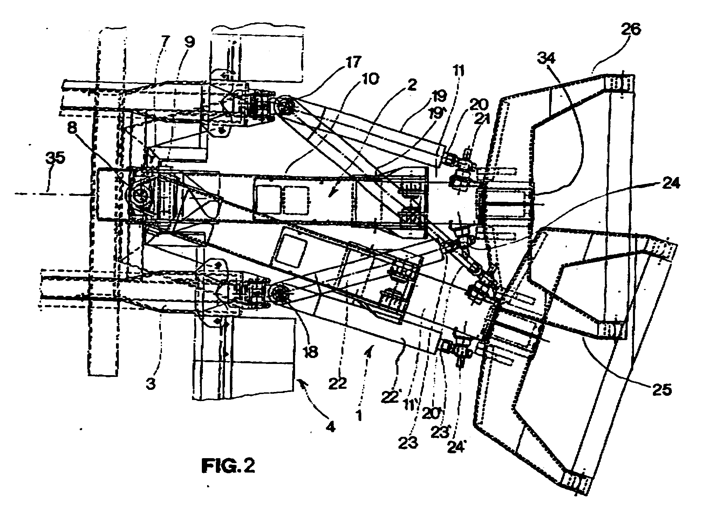

Das Gerät 6, hier in der Form einer Fräse, wird am Rahmen 28 unter zweckmäßiger Befestigung an denselben angehängt. Der Arm 10 hat seine Längsachse zusammenfallend mit der Längsachse 35 des selbstfahenden Fahrzeugs. Wird nun das selbstfahrende Fahrzeug in Fahrtrichtung bewegt, so wird das bewegliche Profil 11 des Arms 2 in eine vollständig ausgezogenen Stellung versetzt, die durch einen nicht gezeigten, den Auszug des Profils 11 selbst begrenzenden Endanschlag festgelegt wird. Die Kolbenstangen 20 und 23 befinden sich in dieser Situation etwa auf ihrem halben Auszugsweg. Der Geräteträger wird nun in Schwimmstellung des Gerätes 6 mit unbelasteten Zylindern 19 und 22 deichselartig nachgezogen. Möchte man nun eine Kurve ausführen oder eine gegenüber dem selbstfahenden Fahrzeug 4 geneigte Position des Geräteträgers 1 erreichen, um Böschungen oder seitliche Hindernisse zu vermeiden oder um Material in Richtung der Mitte der Piste, wie beispielsweise in Figur 2 gezeigt, fördern, so wird Druckmittel durch Steuerung der hydraulischen Anlage dem Zylinder 19 zugeführt, wodurch der Auszug der Kolbenstange 20' in die vollständig ausgezogene Stellung des Kolbens 20 bis zur geneigten Position 20' verursacht wird. So wirkt der Zylinder 19 wie ein Lenkarm. Gleichzeitig wird der vollständig drucklose Zylinder 22 mit vollständig zurückgezogener Kolbenstange 23 in die Position 22', 23', 24' verschwenkt: so wirkt der Zylinder einfach als Schwenkarm. Die Endposition ist gegeben, sobald der Zylinder 19 vollständig ausgezogen und der Zylinder 22 vollständig eingezogen ist bzw. umgekehrt.

Möchte man einen Arbeitsgang des Gerätes 6 in der Tiefe ausführen, so wird auf dem Zylinder 32 eingewirkt, der mit Auszug der Kolbenstange 30 dafür sorgt, daß der Rahmen 28 und daher das Gerät 6 nach unten geneigt wird.

Für einfache Transportvorgänge wird die Kolbenstange 14 in den Zylinder 13 zurückgezogen, wobei der teleskopierbare Arm 2 in die Position 2' gebracht wird, in der der Geräteträger sich mit dem Fahrzeugrahmen im Anschlag befindet. Um eine vollständig stabile Position zu erhalten, befindet sich der teleskopierbare Arm 2 entweder mit dem Zylinder 19 oder mit dem Zylinder 22 im Anschlag.

Der erfindungsgemäße Geräteträger erfüllt hauptsächlich vier Funktionen:
a) Das Präparieren beispielsweise von Skipisten wird in einer schwimmenden Position ohne hydraulische Kraft mit einfachem Deichselzug des Gerätes ausgeführt;
b) das Gerät kann mittels des Zylinder mit einstellbarer Kraft auf die zu präparierende Piste gedrückt werden;
c) der Geräteträger kann in eine seitliche Position geneigt werden, wobei auf einen einzigen Zylinder für eine Neigungsrichtung eingewirkt wird;
d) der Geräteträger kann in eine angehobene, stabile Position während des Transportes angehoben werden.

Der erfindungsgemäße Geräteträger erhöht nicht nur die Manövrierfähigkeit des selbstfahrenden Fahrzeugs, sondern erlaubt überdies einen durch höchste Kompaktheit und Stabilität gekennzeichneten Transport.

Für die Steuerung der Zylinder sind keine besondere Endschalter erforderlich, wobei so die Störanfälligkeit herabgesetzt wird. Es wird überdies der Platz- und Materialbedarf reduziert, wobei das so ausgebildete Fahrzeug zum Präparieren von Skipisten insgesamt kostengünstig gestaltet werden kann.

## Patentansprüche

1. Geräteträger (1) zum Anbau an ein selbstfahrendes Fahrzeug (4), insbesondere zum Präparieren von Skipisten, bestehend aus
- einem Aufbau (2), der um eine horizontale (9) und eine vertikale (8) Achse verschwenkbar am Rahmen (3) des selbstfahrenden Fahrzeuges (4) angelenkt werden kann,
- einem Arbeitszylinder (13), der zwischen dem Aufbau (2) und dem Rahmen (3) des selbstfahrenden Fahrzeuges (4) verbunden und fähig ist, den Aufbau (2) in einer vertikalen Ebene zu verschwenken,
- zwei Arbeitszylindern (19, 22), die zwischen dem Aufbau (2) und dem Rahmen (3) des selbstfahrenden Fahrzeuges (4) verbunden und fähig sind, den Aufbau (2) in einer durch die horizontale Anlenkachse (9) gehenden und diese enthaltende Ebene zu verschwenken, und
- einem Halter (5), der an einem dem Anlenkende des Aufbaus (2) am Fahrzeugrahmen (3) abgewandten Ende vorgesehen ist,
wobei der Aufbau durch einen Arm (2) gebildet wird, der am Fahrzeugrahmen über eine Doppelgelenkkupplung (7) angelenkt ist, die die vertikale Schwenkachse (8) und die horizontale Schwenkachse (9) aufweist,
dadurch gekennzeichnet, daß der Arm (2) teleskopierbar ist, an dessen festem Teil eines der Enden des die Bewegungen in einer vertikalen Ebene des Arms (2) ausführenden Arbeitszylinders angelenkt ist und an dessen beweglichem Teil das Ende des Arbeitszylinders angelenkt ist, der die Bewegungen des Arms (2) in der durch die horizontale Achse gehenden und diese enthaltenden Ebene ausführt.

2. Geräteträger (1) nach Anspruch 1, dadurch gekennzeichnet, daß die Arbeitszylinder (19, 22), die die Bewegungen des Arms (2) in einer durch die horizontale Anlenkachse (9) gehende und diese enthaltende Ebene ausführen, am Rahmen (3) an zur Längsachse (35) des selbstfahrenden Fahrzeuges (4) symmetrisch angeordneten Stellen und im wesentlichen in derselben Höhe der horizontalen Achse (9) der Doppelgelenkkupplung (7) angelenkt sind, wobei jede Kolbenstange (20, 23) der Arbeitszylinder am Ende des beweglichen Teils (11) des Arms (2) angelenkt sind.

3. Geräteträger (1) nach den vorstehenden Ansprüchen, dadurch gekennzeichnet, daß die Doppelgelenkkupplung (7) ihre horizontale Achse (9) zwischen der vertikalen Achse (8) und dem Außenende des beweglichen Teils (11) des Arms (2) angeordnet hat.

4. Geräteträger (1) nach Anspruch 1 und 2, dadurch gekennzeichnet, daß die Doppelgelenkkupplung (7) ihre vertikale Achse (8) zwischen der horizontalen Achse (9) und dem Außenende des beweglichen Teils (11) des Arms (2) angeordnet hat.

5. Geräteträger (1) nach Anspruch 1, dadurch gekennzeichnet, daß der Halter (5) einen an Ihm verschwenkbar angelenkten Rahmen (28) trägt, der fähig ist, ein Gerät zu tragen und um seine Anlenkung (27) mittels eines zwischen dem Halter (5) und dem Rahmen (28) wirkenden hydraulischen Zylinder (32) verstellbar ist.

## Claims

1. Tool carrier (1) to be mounted on a self-propelled vehicle (4), particularly for preparing ski tracks, comprising
- a structure (2) rotatably connectable to the frame (3) of the self-propelled vehicle (4) for pivoting around a horizontal (9) and a vertical (8) axis,
- an actuating cylinder (13) connected between the structure (2) and the frame (3) of the self-propelled vehicle (4) and capable of pivoting the structure (2) in a vertical plane,
- two actuating cylinders (19, 22) connected between the structure (2) and the frame (3) of the self-propelled vehicle (4) and capable of pivoting the structure (2) in a plane containing the horizontal rotation axis (9), and
- a support (5) disposed at an end of the structure (2) which is far from the end pivoted to the vehicle frame (3), the structure consisting of an arm (2) pivoted to the vehicle frame through a double articulated joint (7) having said vertical rotation axis (8) and said horizontal rotation axis (9),
characterized in that
the arm (2) is a telescopic arm, on whose fixed part one of the ends of the cylinder actuating the movements of the arm (2) in a vertical plane is pivoted and on whose movable part the end of the cylinder actuating the movements of the arm (2) in the plane containing the horizontal axis is pivoted.

2. Tool carrier (1) according to claim 1, characterized in that the cylinders (19, 22) actuating the movements of the arm (2) in a plane containing the horizontal rotation axis (9) are pivoted on the frame (3) in points placed symmetrically to the longitudinal axis (35) of the self-propelled vehicle (4) and substantially at the same height of the horizontal axis (9) of the double articulated joint (7), each piston rod (20, 23) of the actuating cylinders being pivoted at the end of the movable part (11) of the arm (2).

3. Tool carrier (1) according to the previous claims, characterized in that the double articulated joint (7) has its horizontal axis (9) placed between the vertical axis (8) and the outer end of the movable part (11) of the arm (2).

4. Tool carrier (1) according to claims 1 and 2, characterized in that the double articulated joint (7) has its vertical axis (8) placed between the horizontal axis (9) and the outer end of the movable part (11) of the arm (2).

5. Tool carrier (1) according to claim 1, characterized in that the support (5) carries a frame (28) rotatably pivoted on it, the frame being capable to carry a tool and adjustable around its articulated joint (27) by a hydraulic cylinder (32) acting between the support (5) and the frame (28).

## Revendications

1. Support d'appareil pour le montage sur un véhicule automoteur (4), en particulier pour la préparation des pistes de ski, comprenant:
- une structure (2) destinée à être articulée, de manière rotative autour d'un axe horizontal (19) et d'un axe vertical (8), sur le châssis (3) du véhicule automoteur (4),
- un actionneur relié entre la structure (2) et le châssis (3) du véhicule automoteur (4) et en mesure de causer la rotation de la structure (2) dans un plan vertical,
- deux actionneurs (19, 22) qui sont reliés entre ladite structure (2) et le châssis (3) du véhicule automoteur (4) et sont destinés à causer la rotation de la structure dans un plan passant par l'axe horizontal d'articulation, et
- un soutien (5) prévu à l'extrémité de la structure (2) opposée à l'extrémité d'articulation de cette structure (2) sur le châssis (3) du véhicule automoteur,
la structure étant formée d'un bras (2) articulé sur le châssis du véhicule automoteur à travers un joint de cardan (7) ayant un axe de rotation vertical (8) et un axe de rotation horizontal (9), caractérisé en ce que le bras (2) est télescopique, sur la partie fixe de ce bras étant articulée l'une des extrémités de l'actionneur susceptible de commander les mouvements dans un plan vertical du bras (2) et sur sa partie mobile étant articulée l'extrémité de l'actionner destiné à commander les mouvements du bras (2) dans le plan passant par l'axe horizontal.

2. Support (1) d'appareil selon la revendication 1, caractérisé en ce que les actionneurs (19, 22) destinés à effectuer les mouvements du bras (2) dans un plan passant par l'axe horizontal d'articulation (9) sont articulés sur le châssis (3) à des points disposés symétriquement par rapport à l'axe longitudinal (35) du véhicule automoteur (4) et sensiblement à la même hauteur que l'axe horizontal (9) du joint de cardan (7), chaque tige de piston (20, 23) des actionneurs étant articulée sur l'extrémité de la partie mobile (11) du bras (2).

3. Support (1) d'appareil selon les revendications précédentes, caractérisé en ce que le joint de cardan (7) a son axe horizontal (9) disposé entre l'axe vertical (8) et l'extrémité exterieure de la partie mobile (11) du bras (2).

4. Support (1) d'appareil selon les revendications 1 et 2, caractérisé en ce que le joint de cardan (7) a son axe vertical (8) disposé entre l'axe horizontal (9) et l'extrémité exterieure de la partie mobile (11) du bras (2).

5. Support (1) d'appareil selon la revendication 1, caractérisé en ce que le soutien (5) porte un bâti (28) articulé rotativement sur celui-ci, destiné à porter un appareil et susceptible d'être commandé autour de son articulation (27) au moyen d'un cylindre hydraulique (32) agissant entre le soutien (5) et le bâti (28).
